# EUROPÄISCHE PATENTSCHRIFT

(11) **EP 2 052 791 B1**
(45) Veröffentlichungstag und Bekanntmachung des Hinweises auf die Patenterteilung: **19.07.2017**
(21) Anmeldenummer: 08167204.0
(22) Anmeldetag: 22.10.2008
(51) Int. Cl.: B03B 5/00, B08B 3/04, B08B 3/10, B08B 7/02, B29B 17/02

(54) **VORRICHTUNG UND VERFAHREN ZUR REINIGUNG VON SCHÜTTGUT**
DEVICE AND METHOD FOR CLEANING BULK MATERIAL
DISPOSITIF ET PROCÉDÉ DE NETTOYAGE DE PRODUITS EN VRAC

(30) Priorität: 22.10.2007 DE 102007050693; 26.07.2008 DE 102008034935
(43) Veröffentlichungstag der Anmeldung: 29.04.2009
(73) Patentinhaber: Krones AG, 93073 Neutraubling (DE)
(72) Erfinder: Kirchhoff, Timm, 24977 Westerholz (DE); Haase, Arne, 24955 Harrislee (DE)
(74) Vertreter: Bittner, Bernhard

(56) Entgegenhaltungen:
- WO-A-00/76681
- DE-A1- 2 835 252
- DE-C1- 4 337 206
- FR-A- 2 346 977

## Beschreibung

Die Erfindung bezieht sich auf eine Vorrichtung zum Reinigen von Schüttgut. Bei der Wiederverwertung von Behältnissen und insbesondere Kunststoffbehältnissen ist es üblich, diese Kunststoffbehältnisse zunächst zu zerkleinern und in der Folge die zerkleinerten Teile zu reinigen, um sie anschließend einem Wiederverwertungsprozess zuzuführen. Dabei sind Anlagen bekannt, welche mit Hilfe von Umwälzeinrichtungen das in einem Behältnis befindliche Schüttgut umwälzen und auf diese Weise durch Abrieb bewirken, dass sich Verschmutzungen auf den Einzelteilen wie Etikettenrückstände und dergleichen entfernen lassen. Diese Anlagen arbeiten teilweise zufriedenstellend, erlauben jedoch noch keine vollständige oder weitgehend vollständige Reinigung der einzelnen Partikel.

Das Dokument DE-C1-4337206 offenbart eine Vorrichtung zum Reinigen von Schüttgut gemäß dem Oberbegriff des Anspruchs 1.

Der vorliegenden Erfindung liegt daher die Aufgabe zugrunde, eine Vorrichtung und ein Verfahren zum Reinigen von Schüttgut zur Verfügung zu stellen, welches eine effiziente und weitgehend vollständige Reinigung dieses Schüttguts ermöglicht.

Dies wird erfindungsgemäß durch eine Vorrichtung nach Anspruch 1 und ein Verfahren nach Anspruch 9 erreicht.

Vorteilhafte Ausführungsformen und Weiterbildungen sind Gegenstand der Unteransprüche.

Eine erfindungsgemäße Vorrichtung zum Reinigen von Schüttgut weist ein Behältnis zur Aufnahme des Schüttguts auf. Dieses Behältnis weist eine Einfüllöffnung, die in einem oberen Bereich des Behältnissen angeordnet ist, auf und wenigstens eine Rühreinrichtung, die im Inneren des Behältnisses und drehbar gegenüber dem Behältnis angeordnet ist. Weiterhin ist wenigstens eine Austragseinrichtung vorgesehen, über welche das Schüttgut aus dem Behältnis entnommen werden kann, wobei diese Austragseinrichtung unterhalb der Einfüllöffnung angeordnet ist.

Erfindungsgemäß ist wenigstens eine Zuführung vorgesehen, über die eine Reinigungsflüssigkeit in das Behältnis eingeführt werden kann, wobei diese Zuführung oberhalb der Austragseinrichtung angeordnet ist.

Bei dem Schüttgut handelt es sich insbesondere aber nicht ausschließlich um Partikel und insbesondere Flakes, die bei Recyclingprozessen von PET-Flaschen anfallen. Es wäre jedoch auch möglich, anderes Schüttgut entsprechend mit der erfindungsgemäßen Vorrichtung zu reinigen. Bei der erfindungsgemäßen Vorrichtung findet sowohl eine Nassreinigung beispielsweise durch Lauge, als auch ein Reinigungsprozess bedingt durch Reibung und damit aufgrund der Rühreinrichtung statt. Auf diese Weise kann durch die Kombination der beiden Prozesse eine besonders effiziente Reinigung des Schüttguts erreicht werden. Durch die Einfüllöffnung wird Schüttgut in das Behältnis eingeführt. Genauer wird dieses Schüttgut bzw. die Flakes über die Einfüllöffnung, die bevorzugt in einem Deckel des Behältnisses angeordnet ist, eingefüllt. Anschließend wird das Schüttgut von oben über Düsen mit Flüssigkeit und insbesondere mit heißer Flüssigkeit benetzt. Die Temperatur dieser heißen Waschflüssigkeit liegt zwischen 60° und 98°, bevorzugt zwischen 70° und 95° und besonders bevorzugt zwischen 80° und 95°. Auf diese Weise kann eine kombinierte mechanische und chemische Intensivreinigung unter Einfluss von Temperatur und Waschflüssigkeit, beispielsweise mittels Lauge und Additiven durchgeführt werden.

Durch die Rühreinrichtung wird das Schüttgut innerhalb des Behältnisses in einer horizontalen Ebene umgewälzt und auf diese Weise können durch Reibung Papier bzw. Rückstände von Etiketten von dem Schüttgut abgetrennt werden. Eine vertikale Umwälzung wird vermieden, da sonst die korrekte Verweilzeit im Behältnis nicht gewährleistet werden kann. Aus Gründen der Nachvollziehbarkeit der Reinigung handelt es sich bei dem Behältnis vorzugsweise um einen so genannten "FiFo-Puffer", also einen "first-in-first-out-Puffer", bei dem diejenigen Partikel zuerst aus dem Behältnis entnommen werden, die auch als erstes eingefüllt wurden.

Bei der erfindungsgemäßen Ausführungsform ist innerhalb des Behältnisses eine Filtereinrichtung vorgesehen, welche das Schüttgut im Wesentlichen zurückhält. Durch diese Filtereinrichtung kann jedoch die Reinigungsflüssigkeit bzw. die mittlerweile durch den Reinigungsprozess auch verschmutzte Reinigungsflüssigkeit hindurchtreten. Die erwähnte Austragseinrichtung ist vorzugsweise oberhalb der Filtereinrichtung angeordnet, um das Schüttgut aus dem Behältnis auszutragen.

Bei einer weiteren vorteilhaften Ausführungsform weist die Austragseinrichtung einen Schneckenförderer auf, der das Schüttgut befördert. Weiterhin weist die Austragseinrichtung eine in einer Seitenwand des Behältnisses vorgesehene Öffnung auf. Dieser Schneckenförderer schließt sich direkt an die erwähnte Öffnung in der Seitenwand des Behältnisses an und fördert das Schüttgut nach außen und bevorzugt auch schräg nach oben. Mittels dieses Schneckenförderers bzw. dessen Arbeitsgeschwindigkeit kann auch die Verweilzeit des Schüttguts in der Vorrichtung beeinflusst werden.

Bei einer weiteren vorteilhaften Ausführungsform weist die Rühreinrichtung eine Vielzahl von sich in einer radialen Richtung des Behältnisses erstreckenden Rührkörpern auf. Diese Rührkörper können dabei als flügelartige Gebilde ausgeführt sein, welche sich in einer radialen Richtung der Vorrichtung erstrecken. Damit wird das Schüttgut innerhalb des Behältnisses von oben nach unten gefördert und während dieses Förderungsvorganges gereinigt.

Typische Verweilzeiten des Schüttguts innerhalb des Behältnisses liegen zwischen 10 Minuten und 20 Minuten, bevorzugt im Bereich von 15 Minuten. Die Drehgeschwindigkeit der Rühreinrichtung liegt zwischen 40 Umdrehungen pro Minute und 100 Umdrehungen pro Minute, bevorzugt zwischen 50 Umdrehungen pro Minute und 90 Umdrehungen pro Minute, und besonders bevorzugt zwischen 60 Umdrehungen pro Minute und 80 Umdrehungen pro Minute. Durch diese langsam rotierende Rühreinrichtung bzw. das langsam rotierende Rührwerk wird mechanische Energie in das Schüttgut eingetragen. Das Schüttgut wird durch Reibung (Friktion) an der Wandung des Behältnisses und untereinander von Oberflächenverschmutzungen gereinigt.

Bevorzugt sind mehrere der genannten Rührblätter innerhalb des Behältnisses übereinander angeordnet.

Bei der erfindungsgemäßen Ausführungsform sind in einem oberen Bereich des Behältnisses keine Rührblätter vorgesehen und bevorzugt liegt dieser obere Bereich des Behältnisses zwischen 15 % und 50 %, bevorzugt zwischen 20 % und 40 %, und besonders bevorzugt zwischen 30 % und 40 % des (oberhalb der Filtereinrichtung liegenden) Volumens des Behältnisses. Dieser obere Bereich des Behältnisses (der ohne Rührwerkzeuge ausgeführt ist) wirkt dabei als Vorweiche und dient auch zum Vorheizen des Materials. Die übrigen Bereiche des Behältnisses, in denen die Rührwerkzeuge angeordnet sind, sind als Intensivreinigungszone ausgelegt. Der Materialfüllstand innerhalb des Behältnisses liegt bei ca. 80 %, wobei durch die Materialsäule der Eintrag an mechanischer Energie durch die Rühreinrichtung unterstützt wird.

Bei der erfindungsgemäßen Ausführungsform weist das Behältnis einen eckigen Querschnitt auf. Dieser eckige Querschnitt dient als Strömungsbrecheinrichtung, damit verhindert wird, dass durch die Rühreinrichtung eine Rotation des Gemisches aus der Flüssigkeit und dem Schüttgut entsteht. Daneben können zusätzliche Strömungsbrecher beispielsweise zwischen den Rührblättern der Rühreinrichtung vorgesehen sein.

Durch das Vorsehen eines eckigen Querschnitts entstehen Bereiche, welche von den Rührblättern nicht ergriffen werden und damit kann auf diese Weise das Entstehen von Strömungen verhindert werden.

Bei einer weiteren vorteilhaften Ausführungsform ist eine Steuerungseinrichtung vorgesehen, die bewirkt, dass ein Füllstand der Flüssigkeit innerhalb des Behältnisses zwischen 20 % und 70 %, bevorzugt zwischen 30 % und 60 % und besonders bevorzugt zwischen 40 % und 50 % liegt.

Durch die Kombination der Parameter Zeit, Temperatur, Lauge und Mechanik werden auch sogenannte Hotmelt - Klebstoffe gelöst. Über eine hohe Umwälzleistung der Waschlauge wird für einen wirkungsvollen Schutzaustrag aus der Vorrichtung gesorgt und auch eine Wiederbeschmutzung des Schüttguts, das heißt der Kunststoffflakes, verhindert. Bei einer weiteren vorteilhaften Ausführungsform ist unterhalb der Filtereinrichtung eine Ausführöffnung vorgesehen, durch welche Reinigungsflüssigkeit dem Behältnis zu entnehmen ist.

Genauer gesagt kann die verschmutzte Waschlauge durch ein Bodenblech aus der eigentlichen Waschzone ausgesaugt und bevorzugt anschießend über eine externe mehrstufige Aufreinigungseinrichtung wieder aufbereitet werden. Bei dieser Aufreinigung kann beispielsweise eine Siebmaschine für den Austrag von Etikettenpulpen, groben Verunreinigungen und eine Membranfiltration für die Abscheidung von Klebstoffresten und sonstigen Zersetzungsprodukten vorgesehen sein. Anschließend wird bevorzugt die Waschlauge über eine externe Temperierung in einem Lagertank in einen Kreislauf transportiert bzw. gefahren.

Genauer gesagt, gelangt die Reinigungsflüssigkeit ausgehend von der erfindungsgemäßen Vorrichtung in eine Siebmaschine zur Ausfilterung grober Verunreinigungen. An diese Siebmaschine schließt sich eine zweite Aufbereitung der Flüssigkeit an und daran wiederum eine oder mehrere Heizeinrichtungen zum Aufheizen der Reinigungsflüssigkeit. Im Rahmen dieses Heizvorgangs können auch Dosierungen von Säuren, Laugen, Detergentien und / oder Entschäumer vorgenommen werden. Als Lauge kann z.b. NaOH verwendet werden.

Die oben erwähnte Steuereinrichtung dient auch zur Kontrolle der Füllstände des Materials bzw. Schüttguts und der Waschlauge mit Hilfe einer Minimal-Maximalregelung. Damit wird sichergestellt, dass sowohl der Füllstand der Waschflüssigkeit als auch derjenige des Schüttguts stets innerhalb vorbestimmter Grenzen liegt. Die Verweilzeit des Schüttguts innerhalb der Vorrichtung wird wie oben erwähnt, über eine Austragsschnecke beeinflusst.

Bei einer weiteren vorteilhaften Ausführungsform weist die Rühreinrichtung einen sich von oben nach unten erweiternden Übergangsabschnitt auf. Dabei ist zu berücksichtigen, dass, je tiefer das Schüttgut innerhalb der Vorrichtung liegt, desto höher der Flüssigkeitsanteil ist. Diese verminderte Zähigkeit wird durch den sich von oben nach unten erweiternden Übergangsabschnitt und den damit verminderten Abstand zwischen der Wandung des Behältnisses und dem Außenumfang der Rühreinrichtung kompensiert.

Die vorliegende Erfindung ist weiterhin auf ein Verfahren zum Reinigen von Schüttgut gerichtet. Dabei wird in einem ersten Schritt das Schüttgut in das Behältnis eingeführt, wobei das Schüttgut über eine Einfüllöffnung eingeführt wird, welche in einem oberen Bereich des Behältnisses vorgesehen ist. Weiterhin wird das Schüttgut innerhalb des Behältnisses mit einer Rühreinrichtung umgewälzt und schließlich wird das Schüttgut aus dem Behältnis mit Hilfe einer Austragseinrichtung ausgetragen. Erfindungsgemäß wird das Schüttgut innerhalb des Behältnisses mit einer Reinigungsflüssigkeit beaufschlagt. Damit wird auch bei dem erfindungsgemäßen Verfahren das Schüttgut innerhalb des Behältnisses von oben nach unten gefördert.

Bei der erfindungsgemäßen Ausführungsform wird die Reinigungsflüssigkeit dem Behältnis von oben und insbesondere durch den Deckel des Behältnisses zugeführt.

Bei dem erfindungsgemäßen Verfahren wird die Reinigungsflüssigkeit mittels einer Filtereinrichtung innerhalb des Behältnisses von dem Schüttgut getrennt. Damit kann das gereinigte Schüttgut über beispielsweise eine Schneckenfördereinrichtung abgezogen und die Reinigungsflüssigkeit selbst wieder dem Behältnis entnommen und aufbereitet werden.

Das gereinigte Schüttgut wird vorzugsweise mittels eines Schneckenförderers aus dem Behältnis entnommen. Vorteilhaft wird für das erfindungsgemäße Verfahren eine Vorrichtung der oben beschriebenen Art verwendet.

Weitere Vorteile und Ausführungsformen ergeben sich aus den beigefügten Figuren. Dabei zeigen:
- Fig. 1: eine erste schematische Darstellung einer erfindungsgemäßen Vorrichtung zum Reinigen von Schüttgut; und
- Fig. 2: Eine weitere Ansicht der Vorrichtung aus Fig. 1.

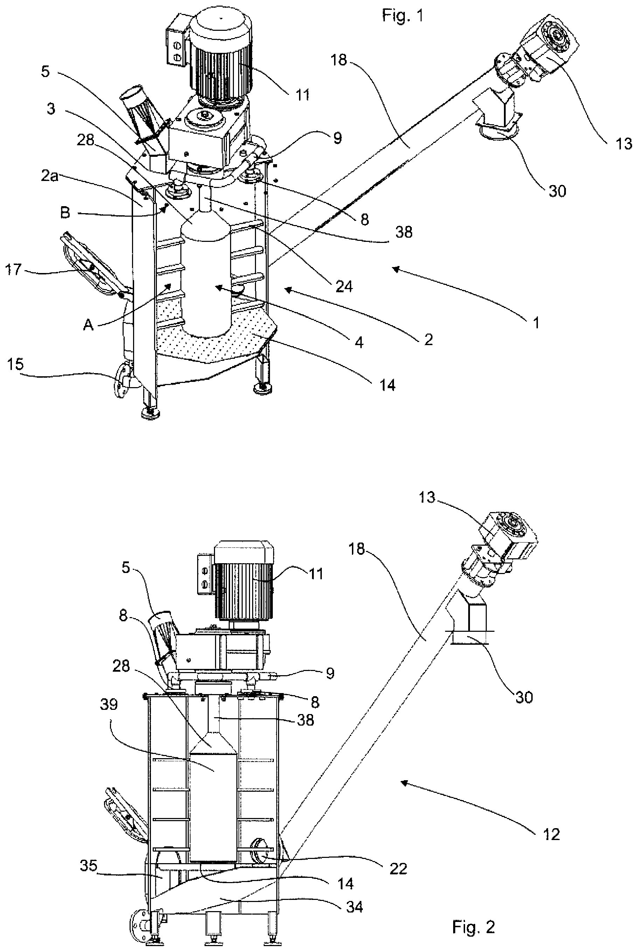

Fig. 1 zeigt eine erfindungsgemäße Vorrichtung 1 zum Reinigen von Schüttgut. Diese Vorrichtung 1 weist ein Behältnis 2 auf, innerhalb dessen das (nicht gezeigte) Schüttgut in vertikaler Richtung, genauer von oben nach unten gefördert wird. Genauer gesagt wird das Schüttgut über eine Einfüllöffnung 5 in das Behältnis 2 eingeführt. Diese Einfüllöffnung 5 ist dabei in einem Deckel 3 des Behältnisses 2 angeordnet. Innerhalb des Behältnisses 2 befindet sich eine Rühreinrichtung 4, die eine Vielzahl von Rührblättern 24 aufweist, die sich um eine Längsachse L des Rührwerks, die gleichzeitig auch eine Längsachse L der Vorrichtung 1 ist, drehen. Man erkennt, dass die Rührblätter 24 nur in einem unteren Bereich A des Behältnisses, nicht jedoch in einem oberen Bereich B des Behältnisses vorgesehen sind. Diese Rühreinrichtung 4 wird durch eine Antriebseinrichtung 11 angetrieben, wobei der Antrieb hier von oben über eine Antriebswelle 38 erfolgt.

Weiterhin ist bei der in Fig. 1 gezeigten Ausführungsform die Rühreinrichtung 4 gegenüber einer Filtereinrichtung 14 gelagert und unterhalb dieser Filtereinrichtung 14 sind keine Komponenten der Rühreinrichtung mehr vorgesehen. Über eine Vielzahl von Zuführungen 8 wird dem Behältnis eine Reinigungsflüssigkeit insbesondere eine Lauge mit einem 1,5 bis 2%-igen Anteil an OH⁻ - Ionen zugeführt. Zu diesem Zweck ist eine Rohrleitung 9 vorgesehen, welche die einzelnen Zuführungen 8 versorgt. Bei diesen an dem Deckel 3 angeordneten Zuführungen 8 handelt es sich um Düsen, welche das Schüttgut möglichst gleichmäßig benetzen. Man erkennt an der Ausgestaltung der Filtereinrichtung 14, dass auch das Behältnis 2 keine kreisförmige sondern eine eckige Gestalt aufweist, im Falle der in Fig. 1 gezeigten Ausführungsform eine achteckige Gestalt. Auf diese Weise können ungewollte Bewegungen des Schüttguts ausgelöst durch die Rühreinrichtung 4 verhindert werden.

Das Bezugszeichen 28 bezieht sich auf einen Übergangsabschnitt, in dem sich die Rühreinrichtung ausgehend von der Welle 38 hin zu einem zylinderförmigen Drehkörper 39 erweitert. An diesem Drehkörper 39 sind die Rührblätter 24 angeordnet.

Das Bezugszeichen 15 bezieht sich auf einen Auslass zum Auslassen von Flüssigkeit.

Über eine Austragseinrichtung, die in ihrer Gesamtheit mit dem Bezugszeichen 12 bezeichnet ist, wird das Schüttgut aus dem Behältnis entnommen. Diese Austragseinrichtung 12 weist dabei einen Schneckenförderer 18 auf, der wiederum von einem Motor 13 angetrieben wird. Über einen Ausführkanal 30 wird das Schüttgut schließlich aus der Vorrichtung 1 ausgegeben und bevorzugt in eine weitere Reinigungseinheit wie beispielsweise ein Austragsbehältnis verbracht.

Das Bezugszeichen 17 bezieht sich auf einen Deckel, der geöffnet werden kann, um Schmutzreste aus dem Behältnis 2 zu entnehmen.

Bei der in Fig. 1 gezeigten Ausführungsform sind lediglich 8 Rührblätter dargestellt, es könnten jedoch auch mehrere Rührblätter vorgesehen sein, die sich beispielsweise senkrecht zu den in Fig. 1 gezeigten Rührblättern 24 erstrecken.

Fig. 2 zeigt eine weitere Ansicht der Vorrichtung aus Fig. 1. Man erkennt auch hier mehrere Zuführungen 8, über welche dem Behältnis 2 die Waschflüssigkeit zugeführt wird. Weiterhin ist erkennbar, dass unterhalb der Filtereinrichtung 14 eine Ausführhilfseinrichtung 34 in Form einer schräg liegenden Platte vorgesehen ist, welche ein Entnehmen von Verschmutzungen unterhalb des Filters erleichtert. Genauer gesagt werden Verschmutzungen durch diese Hilfseinrichtung in Richtung einer Öffnung 35 gedrängt, welche nach Öffnen des Deckels 17 zugänglich ist.

Diese Öffnung 35 erstreckt sich auch noch um einen gewissen Bereich oberhalb der Filtereinrichtung 14, so dass über diese Öffnung 35 auch Schüttgut mit ausgetragen werden kann.

Zusätzlich wäre es möglich, mehrere dieser Öffnungen 35 vorzusehen, um auch von verschiedenen Bereichen her in die Vorrichtung eingreifen zu können. Zwischen der Filtereinrichtung 14 und dem Drehkörper 39 ist eine Lagereinrichtung vorgesehen, um den Drehkörper 39 für seine Drehung lagern zu können.

Die Austragsöffnung 22 ist direkt oberhalb der Filtereinrichtung 14 vorgesehen, so dass das Schüttgut auch teilweise durch diese Austragsöffnung 22 in den Schneckenförderer 18 hineingepresst wird und auf diese Weise leichter gefördert werden kann. Die Austragsöffnung ist in einem Wandabschnitt 2a des Behältnisses 2 angeordnet.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Reinigen von Schüttgut mit einem Behältnis (2) zur Aufnahme des Schüttguts, mit einer Einfüllöffnung (5), die in einem oberen Bereich des Behältnisses (2) angeordnet ist, mit wenigstens einer Rühreinrichtung (4), die im Innern des Behältnisses (2) und drehbar gegenüber dem Behältnis (2) angeordnet ist, und wenigstens einer Austragseinrichtung (12), über welche das Schüttgut dem Behältnis (2) entnommen werden kann, wobei diese Austragseinrichtung (12) unterhalb der Einfüllöffnung (5) angeordnet ist, und wobei wenigstens eine Zuführung (8) vorgesehen ist, über welche eine Reinigungsflüssigkeit in das Behältnis (2) eingeführt werden kann, wobei diese Zuführung (8) oberhalb der Austragseinrichtung (12) angeordnet ist,
**dadurch gekennzeichnet, dass**
die Rühreinrichtung (4) derart ausgestaltet ist, dass das Schüttgut innerhalb des Behältnisses (2) in einer horizontalen Ebene umwälzbar ist und in einem oberen Bereich (B) des Behältnisses (2) keine Rührblätter (24) vorgesehen sind, wobei das Behältnis (2) einen eckigen Querschnitt aufweist und innerhalb des Behältnisses (2) eine Filtereinrichtung (14) vorgesehen ist, welche das Schüttgut im Wesentlichen zurückhält.

2. Vorrichtung (1) nach Anspruch 1, **dadurch gekennzeichnet, dass** die Austragseinrichtung (12) einen Schneckenförderer (18) aufweist, der das Schüttgut befördert.

3. Vorrichtung (1) nach wenigstens einem der vorangegangenen Ansprüche, **dadurch gekennzeichnet, dass** die Austragseinrichtung (12) eine in einer Seitenwand (2a) des Behältnisses (2) vorgesehene Öffnung (22) aufweist.

4. Vorrichtung (1) nach wenigstens einem der vorangegangenen Ansprüche, **dadurch gekennzeichnet, dass** die Rühreinrichtung (4) eine Vielzahl von sich in einer radialen Richtung des Behältnisses erstreckenden Rührblätter (24) aufweist.

5. Vorrichtung (1) nach einem der vorangegangenen Ansprüche, **dadurch gekennzeichnet, dass** der obere Bereich des Behältnisses zwischen 15% und 50%, bevorzugt zwischen 20% und 40% und besonders bevorzugt zwischen 30% und 40% des Volumens des Behältnisses (2) liegt.

6. Vorrichtung (1) nach wenigstens einem der vorangegangenen Ansprüche, **dadurch gekennzeichnet, dass** eine Steuerungseinrichtung vorgesehen ist, die bewirkt, dass ein Füllstand der Flüssigkeit innerhalb des Behältnisses (2) zwischen 20% und 70%, bevorzugt zwischen 30% und 60% und besonders bevorzugt zwischen 40% und 50% liegt.

7. Vorrichtung (1) nach wenigstens einem der vorangegangenen Ansprüche, **dadurch gekennzeichnet, dass** unterhalb der Filtereinrichtung (14) eine Ausführöffnung vorgesehen ist, über welche Reinigungsflüssigkeit dem Behältnis (2) entnehmbar ist.

8. Vorrichtung (1) nach wenigstens einem der vorangegangenen Ansprüche, **dadurch gekennzeichnet, dass** die Rühreinrichtung (4) einen sich von oben nach unten erweiternden Übergangsabschnitt (28) aufweist.

9. Verfahren zum Reinigen von Schüttgut mit den Schritten:
- Einführen des Schüttguts in ein Behältnis (2), das einen eckigen Querschnitt aufweist, wobei das Schüttgut über eine Einfüllöffnung (5) eingeführt wird, welche in einem oberen Bereich des Behältnisses (2), in welchem keine Rührblätter (24) vorgesehen sind, vorgesehen ist;
- Beaufschlagen des Schüttguts innerhalb des Behältnisses (2) mit einer Reinigungsflüssigkeit aus einer Zuführung (8) welche oberhalb der Austragseinrichtung (12) angeordnet ist;
- Umwälzen des Schüttguts in einer horizontalen Ebene innerhalb des Behältnisses (2) mit einer drehbar gegenüber dem Behältnis (2) angeordneten Rühreinrichtung (4), bei der in einem oberen Bereich (B) des Behältnisses (2) keine Rührblätter (24) vorgesehen sind;
- Zurückhalten des Schüttguts mit einer Filtereinrichtung (14) innerhalb des Behältnisses (2);
- Austragen des Schüttguts aus dem Behältnis mit Hilfe einer unterhalb der Einfüllöffnung (5) angeordneten Austragseinrichtung.

10. Verfahren nach Anspruch 9, **dadurch gekennzeichnet, dass** die Reinigungsflüssigkeit aus dem Behältnis (2) entnommen und anschließend gereinigt wird.

11. Verfahren nach Anspruch 9, **dadurch gekennzeichnet, dass** das Schüttgut im Behältnis (2) nur horizontal durchmischt wird, sodass eine definierte Verweilzeit des Schüttguts im Behältnis (2) gewährleistet ist.

## Claims

1. Apparatus (1) for cleaning bulk material, comprising a container (2) for receiving the bulk material, comprising a filling opening (5) which is arranged in an upper region of the container (2), comprising at least one stirring device (4) which is arranged in the interior of the container (2) and such that it can rotate with respect to the container (2), and at least one discharge device (12) via which the bulk material can be removed from the container (2), wherein this discharge device (12) is arranged below the filling opening (5), and wherein at least one feed (8) is provided, via which a cleaning liquid can be introduced into the container (2), wherein this feed (8) is arranged above the discharge device (12) **characterised in that**
the stirring device (4) is designed in such a way that the bulk material can be circulated within the container (2) in a horizontal plane and in an upper region (B) of the container (2) there are no stirring blades (24) provided, wherein the container (2) has an polygonal cross section and inside the container (2) is a filter device (14) which substantially retains the bulk material.

2. Apparatus (1) according to claim 1, **characterised in that** the discharge device (12) comprises a worm conveyor (18) which conveys the bulk material.

3. Apparatus (1) according to at least one of the preceding claims, **characterised in that** the discharge device (12) comprises an opening (22) provided in a side wall (2a) of the container (2).

4. Apparatus (1) according to at least one of the preceding claims, **characterised in that** the stirring device (4) comprises a plurality of stirring blades (24) extending in a radial direction of the container.

5. Apparatus (1) according to one of the preceding claims, **characterised in that** the upper region of the container is between 15% and 50%, preferably between 20% and 40% and particularly preferably between 30% and 40% of the volume of the container (2).

6. Apparatus (1) according to at least one of the preceding claims, **characterised in that** a control device is provided which ensures that a filling level of the liquid inside the container (2) is between 20% and 70%, preferably between 30% and 60% and particularly preferably between 40% and 50%.

7. Apparatus (1) according to at least one of the preceding claims, **characterised in that** provided below the filter device (14) is an outlet opening, via which cleaning liquid can be removed from the container (2).

8. Apparatus (1) according to at least one of the preceding claims, **characterised in that** the stirring device (4) has a transition section (28) which widens from top to bottom.

9. Method for cleaning bulk material, comprising the steps:
- introducing the bulk material into a container (2), having a polygonal section wherein the bulk material is introduced via a filling opening (5) which is provided in an upper region of the container (2), in which no stirring blades (24) are provided;
- applying the bulk material within the container (2) with a cleaning liquid from a feed (8) which is arranged above the discharge device (12);
- circulating the bulk material in a horizontal plane inside the container (2) by means of a stirring device (4) which is arranged rotatable with respect to the container (2) and in which no stirring blades (24) are provided in an upper region (B) of the container (2) ;
- restraining the bulk material with a filter device (14) within the container (2);
- discharging the bulk material from the container by means of a discharge device which is arranged below the filling opening (5).

10. Method according to claim 9, **characterised in that** the cleaning liquid is removed from the container (2) and then purified.

11. Method according to claim 9, **characterised in that** the bulk material in the container (2) is mixed only horizontally, so that a defined residence time of the bulk material in the container (2) is ensured.

## Revendications

1. Dispositif (1) de nettoyage de produit en vrac comprenant un récipient (2) destiné à recevoir le produit en vrac, une ouverture de remplissage (5) étant ménagée dans une zone supérieure du récipient (2), au moins un dispositif d'agitation (4) étant agencé à l'intérieur du récipient (2) et de manière à pouvoir tourner par rapport au récipient (2), et au moins un dispositif de distribution (12) par l'intermédiaire duquel le produit en vrac peut être prélevé du récipient (2), dans lequel ce dispositif de distribution (12) étant agencé au-dessous de l'ouverture de remplissage (5), et dans lequel au moins une conduite d'amenée (8) est prévue, par laquelle un liquide de nettoyage peut être introduit dans le récipient (2), dans lequel cette conduite d'amenée (8) étant agencée au-dessus du dispositif de distribution (12),
**caractérisé en ce que**
le dispositif d'agitation (4) est conçu de telle manière que le produit en vrac peut être brassé à l'intérieur du récipient (2) dans un plan horizontal et aucune pale d'agitation (24) n'est prévue dans une zone supérieure (B) du récipient (2), dans lequel le récipient (2) présente une section transversale polygonale et un dispositif de filtration (14) est prévu à l'intérieur du récipient (2) lequel retient sensiblement le produit en vrac.

2. Dispositif (1) selon la revendication 1, **caractérisé en ce que** le dispositif de distribution (12) comprend un convoyeur à vis (18), qui transporte le produit en vrac.

3. Dispositif (1) selon au moins l'une des revendications précédentes, **caractérisé en ce que** le dispositif de distribution (12) comprend une ouverture (22) ménagée dans une paroi latérale (2a) du récipient (2).

4. Dispositif (1) selon au moins l'une des revendications précédentes, **caractérisé en ce que** le dispositif d'agitation (4) comprend une pluralité de pales d'agitation (24) s'étendant dans une direction radiale du récipient.

5. Dispositif (1) selon l'une quelconque des revendications précédentes, **caractérisé en ce que** la zone supérieure du récipient se situe entre 15 % et 50 %, de préférence entre 20 % et 40 % et de manière particulièrement préférée entre 30 % et 40 % du volume du récipient (2).

6. Dispositif (1) selon au moins l'une des revendications précédentes, **caractérisé en ce qu'**un dispositif de commande est prévu, qui a pour effet qu'un niveau du liquide à l'intérieur du récipient (2) se situe entre 20 % et 70 %, de préférence entre 30 % et 60 % et de manière particulièrement préférée entre 40 % et 50 %.

7. Dispositif (1) selon au moins l'une des revendications précédentes, **caractérisé en ce qu'**une ouverture de distribution, par laquelle le liquide de nettoyage peut être prélevé du récipient (2), est ménagée au-dessous du dispositif de filtration (14).

8. Dispositif (1) selon au moins l'une des revendications précédentes, **caractérisé en ce que** le dispositif d'agitation (4) comprend une section de transition (28) s'élargissant de haut en bas.

9. Procédé de nettoyage de produit en vrac comprenant les étapes :
- d'introduction du produit en vrac dans un récipient (2), présentant une section transversale polygonale, dans lequel le produit en vrac étant introduit par une ouverture de remplissage (5), laquelle est ménagée dans une zone supérieure du récipient (2) dans lequel aucune pale d'agitation (24) n'est prévue ;
- d'application du produit en vrac à l'intérieur du récipient (2) à l'effet d'un liquide de nettoyage sortant d'une conduite d'amenée (8), laquelle est agencée au-dessus du dispositif de distribution (12) ;
- de brassage du produit en vrac dans un plan horizontal à l'intérieur du récipient (2) au moyen d'un dispositif d'agitation (4) monté rotatif par rapport au récipient (2), aucune pale d'agitation (24) n'étant prévue dans une zone supérieure (B) du récipient (2) ;
- de retenue du produit en vrac à l'intérieur du récipient (2) au moyen d'un dispositif de filtration (14) ;
- de distribution du produit en vrac sortant du récipient à l'aide d'un dispositif de distribution agencé au-dessous de l'ouverture de remplissage (5).

10. Procédé selon la revendication 9, **caractérisé en ce que** le liquide de nettoyage est prélevé du récipient (2) puis nettoyé.

11. Procédé selon la revendication 9, **caractérisé en ce que** le produit en vrac n'est brassé qu'horizontalement dans le récipient (2), de sorte qu'un temps de séjour défini du produit en vrac dans le récipient (2) est garanti.
